Europäisches Patentamt

European Patent Office

Office européen des brevets

(19)

(11) Veröffentlichungsnummer: **0 233 972**
**B1**

(12) **EUROPÄISCHE PATENTSCHRIFT**

(45) Veröffentlichungstag der Patentschrift:
**11.10.89**

(21) Anmeldenummer: **86102401.6**

(22) Anmeldetag: **25.02.86**

(51) Int. Cl.⁴: **B65D 45/34, F16L 3/12**

(54) Thermoplastspannring.

(43) Veröffentlichungstag der Anmeldung:
**02.09.87 Patentblatt 87/36**

(45) Bekanntmachung des Hinweises auf die Patenterteilung:
**11.10.89 Patentblatt 89/41**

(84) Benannte Vertragsstaaten:
**AT BE CH FR GB IT LI NL SE**

(56) Entgegenhaltungen:
**DE-A- 2 517 822**
**FR-A- 2 185 550**
**FR-A- 2 381 933**
**US-A- 1 852 038**

(73) Patentinhaber: **Firma Theodor Schemm, Papiermühle,**
**D-5952 Attendorn(DE)**

(72) Erfinder: **Gregory, Dieter, Dr., Papiermühle,**
**D-5952 Attendorn(DE)**

(74) Vertreter: **Hassler, Werner, Dr.,**
**Postfach 17 04 Asenberg 62, D-5880 Lüdenscheid(DE)**

## Beschreibung

Die Erfindung betrifft einen Thermoplastspannring mit einem U-förmigen Querschnitt zum Festspannen von Deckeln auf Fässern, mit einem an einem Ende des Thermoplastspannrings schwenkbar angeordneten Spannhebel und mit einer Spannlasche, die schwenkbar an dem anderen Ende des Thermoplastspannringes und ebenfalls schwenkbar in den Wangen des Spannhebels gehalten ist.

Ein Thermoplastspannring dieser Art ist aus der DE-A 25 24 631 bekannt. Ein derartiger Thermoplastspannring wird nach dem Aufsetzen auf die aufeinanderliegenden Flansche des Faßkörpers und des Deckels in Umfangsrichtung angespannt und zieht dabei den Faßdeckel auf dem Faßkörper fest, indem diese Flansche innerhalb des Profils des Spannringes verspannt und gegeneinander gezogen werden. Damit die Spannwirkung nicht nachläßt, ist nicht nur in Umfangsrichtung eine hohe Festigkeit erforderlich, sondern das Profil des Thermoplastspannringes muß eine hohe Dauersteifigkeit aufweisen, damit sich das Profil des Thermoplastspannringes nicht aufweiten kann, so daß die Flansche des Faßkörpers und des Deckels fest aufeinander gehalten sind.

Die FR-A 2 261 197 beschreibt einen Spannring aus Blech, dessen Profil durch Sicken verstärkt ist. Derartige Sicken sind jedoch bei einem Thermoplastspannring ungeeignet.

Ein solcher Thermoplastspannring hat eine geringere Steifigkeit als ein Spannring aus Stahl. Trotzdem ist ein Thermoplastspannring dann erforderlich, wenn aus Korrosionsgründen oder Gründen des Lebens mittelrechtes einfache Stahlringe oder verzinkte und vergütete Stahlringe nicht eingesetzt werden können. Ein Thermoplastspannring benötigt zur Erzielung einer gleichen Steifigkeit wie ein Stahlspannring mindestens die vierfache Wandstärke, wie Berechnungen ergeben haben.

Dieses führt zu einem übermäßig großen Werkstoffverbrauch und einem entsprechend hohen Preis des Thermoplastspannrings. Die spielfreie und dennoch stabile Verbindung der Gelenkteile mit dem Thermoplastspannring ist schwierg.

Aufgabe der Erfindung ist eine solche Gestaltung des Thermoplastspannringes, daß bei möglichst geringer Wandstärke und damit möglichst geringem Werkstoffeinsatz eine gleiche Steifigkeit wie bei einem Stahlspannring erzielt wird. In weiterer Zielsetzung wird eine feste und spielfreie, sowie nietfreie und verkantungsfreie Gelenkverbindung des Spannhebels und der Spannlasche mit dem Thermoplastspannring und untereinander erstrebt.

Diese Aufgabe wird nach der Erfindung dadurch gelöst, daß über den Umfang verteilt zahlreiche parallel zur Achse des Thermoplastspannringes ausgerichtete Versteifungsrippen auf der Außenseite des Thermoplastspannringes und außerdem an den Rändern Ringwulste vorgesehen sind, in die die Versteifungsrippen übergehen, daß an den Enden des Thermoplastspannringes hakenförmige Gelenkaugen je einen Gelenkbolzen der Spannlasche bzw. des Spannhebels aufnehmen und daß die Spannlasche sowie der Spannhebel mit ihren Wangen die Gelenkaugen seitlich übergreifen.

Die Erfindung unterscheidet sich insofern vom Stand der Technik, als die Wandung des Thermoplastspannringes selbst vergleichsweise dünn sein kann. Bei gleicher Steifigkeit ist die Wandstärke etwa so groß oder nur wenig größer als die Wandstärke eines Stahlspannringes. Die erforderliche Steifigkeit wird durch die Verstärkungsrippen und die Ringwulste sichergestellt. Infolge der hohen Steifigkeit ist auch die Verformung des Thermoplastspannringes unter Belastung so gering, daß der Thermoplastspannring ohne weiteres anstelle eines Stahlspannringes eingesetzt werden kann. Versuche haben diese Überlegungen bestätigt. Durch die nietfreie Verbindung des Spannhebels und der Spannlasche mit den Enden des Thermoplastspannrings und untereinander wird auch die Handhabung des Thermoplastspannrings verbessert. Der Thermoplastspannring gleitet mit geringer Reibung auf dem Kunststoffwerkstoff der Faß- und Deckelflansche. Infolgedessen läßt sich der Thermoplastspannring sehr leicht handhaben. Die übergreifenden Wangen sichern eine Verkantungsfreiheit und gewährleisten eine hohe Verwindungssteifigkeit der Spannverbindung.

Zur Geringhaltung des Werkstoffverbrauchs und zur Erhöhung der Steifigkeit ist vorgesehen, daß die Versteifungsrippen als flache Stege ausgebildet sind.

Die Form der Versteifungsrippen kann im Rahmen der Zielsetzung der Erfindung abweichend gestaltet sein. Auch die Anzahl der Versteifungsrippen kann dem jeweiligen Anwendungsfall angepaßt werden. Wichtig ist jedoch, das die Versteifungsrippen die Steifigkeit in axialer Richtung des Spannringes auf den geforderten Wert erhöhen.

Zur weiteren Verbesserung der Verweindungssteifigkeit der Spannverbindung und zur Führung des Verschlusses beim Schließen des Spannhebels ist vorgesehen, daß die Spannlasche mit ihren Wangen den Spannhebel und den Thermoplastspannring übergreift und mit ihrem endständigen Gelenkbolzen in Lagerschlitze der Wangen des Spannhebel eingreift.

Eine Ausführungsform der Erfindung wird im folgenden unter Bezugnahme auf die anliegenden Zeichnungen erläutert, in denen darstellen:

Fig. 1 eine Gesamtansicht eines Thermoplastspannringes nach der Erfindung in geöfnetem Zustand,

Fig. 2 eine entsprechende Ansicht des Thermoplastspannrings in geschlossenem Zustand,

Fig. 3 eine Ansicht der Spannverbindung in Pfeil-richtung III,

Fig. 4 einen Schnitt nach der Linie IV-IV in Fig. 3 und

Fig. 5 einen Schnitt nach der Linie V-V in Fig.1.

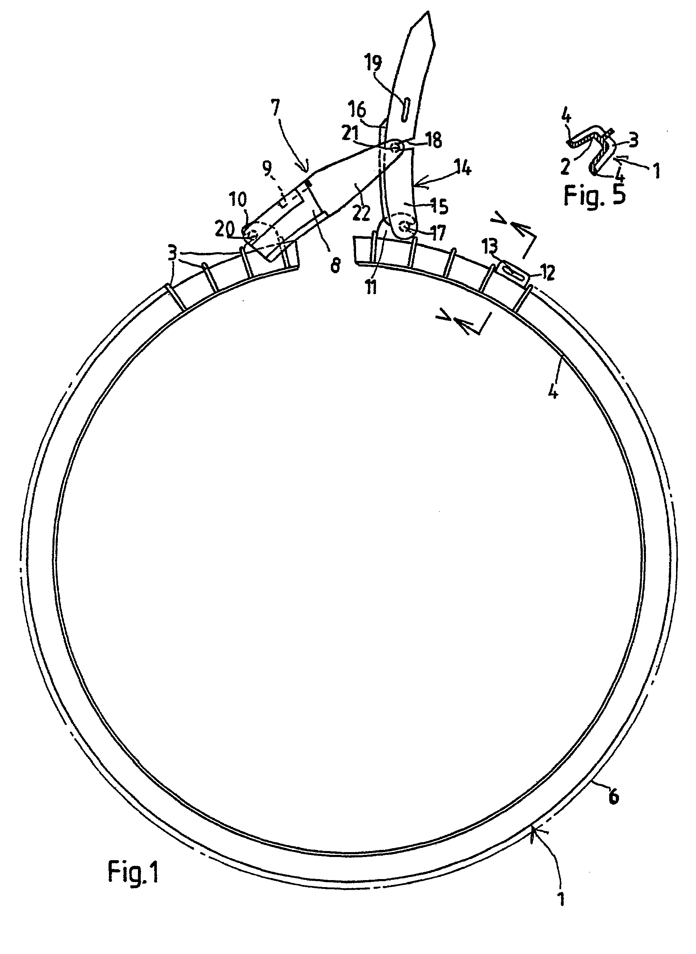

Fig. 1 zeigt den Thermoplastspannring 1 im Grundzustand vor dem Aufsetzen auf ein Faß. Der Thermoplastspannring 1 hat ein im wesentlichen U-förmiges Profil 2, wie man der Fig. 5 entnimmt. Das U-förmige Profil 2 ist gegen die Achse des Thermoplastspannringes 1 offen. An den Rändern des U-förmigen Profils 2 sind Ringwulste 4 angeformt, die jeweils nach außen gerichtet sind. Auf der Außenseite des Thermoplastspannringes 1 sind Versteifungsrippen 3 in Form von flachen Stegen vorgesehen die parallel zur Achse des Thermoplastspannringes 1 verlaufen und das Profil 2 auf der gesamten Außenseite umschließen. Die Versteifungsrippen 3 gehen in die Ringwulste 4 über, so daß eine gitterförmige Versteifungsstruktur vorliegt. Die Versteifungsrippen 3 können in den Kantenbereichen des Thermoplastspannringes 1 Verstärkungen des Querschnittes aufweisen, um so eine erhöhte Steifigkeit sicherzustellen. Die Form und insbesondere die Umrißform sowie die Anzahl der Versteifungsrippen muß im Hinblick auf die gewünschte Steifigkeit festgelegt werden. Im Einzelnen sind natürlich Abwandlungen der Form möglich.

Die Versteifungsrippen 3 tragen zur Erhöhung der Steifigkeit des Thermoplastspannringes 1 bei. Insbesondere wird erreicht, daß die Steifigkeit in Richtung der Achse des Thermoplastspannringes hoch ist, so daß ein Aufspreizen der Flansche des U-förmigen Profils 2 ausgeschlossen ist.

In Fig. 1 sind nur einige Versteifungsrippen 2 dargestellt. Die Versteifungsrippen 3 setzen sich in entsprechender Weise über den gesamten Umfang des Thermoplastspannringes 1 fort, wie durch die strichpunktierte Linie 6 angedeutet ist.

Der Thermoplastspannring 1 ist in der in Fig. 1 dargestellten Form einstückig gespritzt. An den Enden des Thermoplastspannringes sind hakenförmige Gelenkaugen 10 und11 angeordnet. Jedes Gelenkauge 10 und 11 hat die dargestellte Hakenform, wobei die Hakenöffnung von dem jeweiligen Ende des Thermoplastspannrings 1 weggerichtet ist. Die Gelenkaugen haben eine Breite, die etwa der Breite des Rückens des Thermoplastspannringes entspricht. Ferner ist in der Nähe eines Endes des Spannringes ein Ansatz 12 mit einem Querschlitz 13 vorgesehen. Dieser Querschlitz 13 dient zur Aufnahme eines Sicherungsblechs.

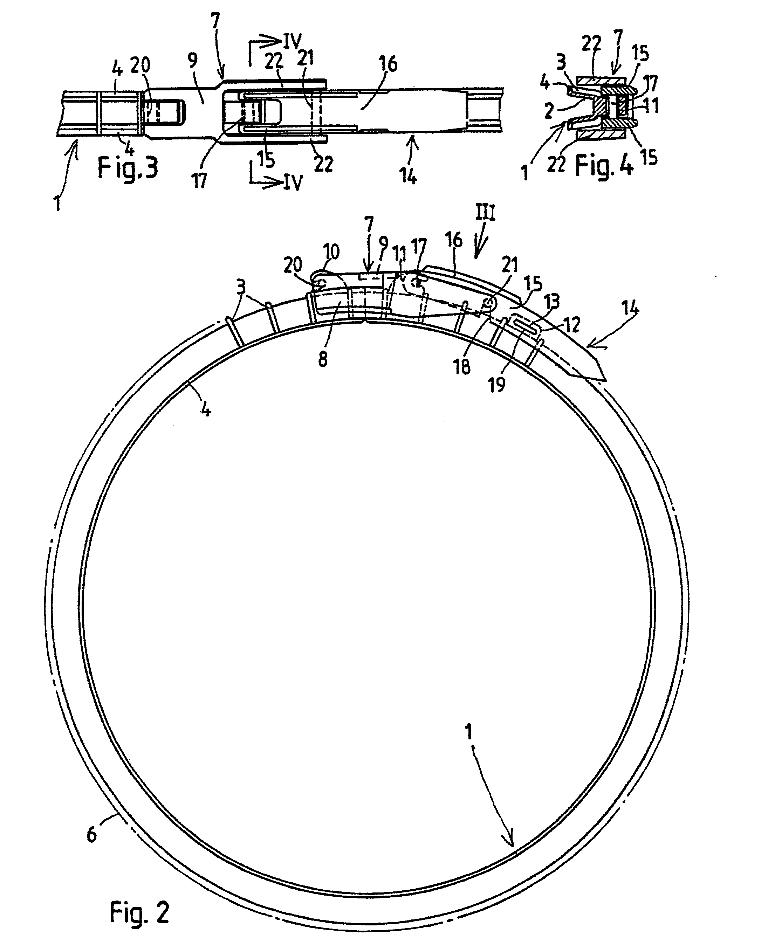

Ein Spannhebel 14 hat einen im wesentlichen U-förmigen Querschnitt, wobei zwei Wangen 15 durch einen Rücken 16 miteinander verbunden sind. Der Rücken 16 hat gegebenenfalls eine Profilierung zur Versteifung des Spannhebels 14. Zwischen den Enden der Wangen 15 ist ein Gelenkbolzen 17 ausgebildet, der in die Aufnahme des Gelenkauges 11 paßt. Diese Aufnahme des Gelenkauges 11 weist eine leichte Hinterschneidung auf, so daß der Gelenkbolzen 17 in die Aufnahme des Gelenkauges 1 eingesprengt werden kann. Außerdem sind in den Wangen 15 Lagerschlitze 18 vorgesehen, deren endständige Aufnahme ebenfalls eine Hinterschneidung aufweist. Schließlich weisen die Wangen 15 Durchbrüche 19 auf, die mit dem Querschnit 13 zur Überdeckung kommen, so daß in der Schließstellung nach Fig. 2 das nicht dargestellte Sicherungsblech durch die Durchbrüche 19 und den Querschnitt 13 gesteckt werden kann.

Ferner ist eine Spannlasche 7 vorgesehen, die aus zwei einander gegenüberliegenden Wangen 8 und einem Rückenteil 9 besteht. An den Enden sind zwischen den Wangen 8 Gelenkbolzen 20, 21 ausgebildet. Der Gelenkbolzen 20 läßt sich in die Aufnahmen des Gelenkauges 10 einsprengen. Der Gelenkbolzen 21 findet in den Lagerschlitzen 18 Aufnahme, wobei die Hinterschneidung der Lagerschlitze 18 eine klemmende Festhaltung gewährleistet.

Die Wangen 8 haben im Bereich des Gelenkbolzens 20 einen Abstand voneinander, der etwa der äußeren Breite des Thermoplastspannringes entspricht. Die Wangen 8 setzen sich dann in Endabschnitte 22 fort, die einen größeren Abstand voneinander haben, der der Außenbreite des Spannhebels 14 entspricht, wie dies besonders deutlich aus den Fig. 3 und 4 zu erkennen ist.

Diese Ausbildung ermöglicht einerseits eine saubere Führung des Spannhebels und der Spannlasche beim Schließen des Spannverschlusses und außerdem eine Querführung der Enden des Spannringes. Hierdurch wird erreicht, daß im Schließzustand nach den Fig. 2 und 3 die Enden des Thermoplastspannringes 1 in axialer Richtung durch den Spannhebelverschluß zusammengehalten sind und in diesem Bereich keine Verkantungen auftreten können. Dieses ist für die Festigkeit des Spannverschlusses und für die Funktion desselben außerordentlich wichtig.

Der Thermoplastspannring 1, die Spannhebel 14 und die Spannlasche 7 sind Thermoplastspritzgießteile. Diese Teile werden in der beschriebenen Weise ineinander gefügt, indem die jeweiligen Gelenkbolzen in die Gelenkaugen eingesprengt werden. In geöffnetem Zustand nach Fig. 1 bildet der Thermoplastspannring mit dem Verschluß eine handhabbare Einheit, die auf einen Faßkörper aufgesetzt werden kann.

Nach dem Aufsetzen wird der Spannhebel 14 verschwenkt. Dadurch wird der Thermoplastspannring 1 in Umfangsrichtung zusammengezogen, so daß er die Schließstellung nach Fig. 2 einnimmt und den Faßdeckel auf dem Faßkörper festspannt, indem die Flansche oder Bordüren des Faßdeckels und des Faßkörpers zwischen den Flanschen des Thermoplastspannringes 1 gegeneinander gespannt werden. Die Versteifungsrippen stellen eine hohe Steifigkeit sicher, so daß sich die Flansche 5 nicht aufspreizen können. Die Spannwirkung bleibt dadurch erhalten. Berechnungen und Versuche haben ergeben, daß die dargestellte Gestaltung des Thermoplastspannringes eine Erhöhung der Steifigkeit durch die Versteifungsrippen 3 gewährleistet, so daß die Wandstärke des Profils 2 gegenüber einem Stahlspannring nur geringfügig größer sein muß. Der Spannverschluß trägt durch die seitliche Führung der Wangen zur Steifigkeit und Verkantungsfreiheit der Anordnung bei.

## Patentansprüche

1. Zum Festspannen von Deckeln auf Fässern bestimmter Thermoplastspannring mit einem U-förmigen Querschnitt, mit einem an einem Ende des Thermoplastspannrings (1) schwenkbar angeordneten Spannhebel (14) und mit einer Spannlasche (7), die schwenkbar an dem anderen Ende des Thermoplastspannrings und ebenfalls schwenkbar in den Wangen (15) des Spannhebels gehalten ist, dadurch gekennzeichnet, daß über dem Umfang verteilt zahlreiche parallel zur Achse des Thermoplastspannringes (1) ausgerichtete Versteifungsrippen (3) auf der Außenseite des Thermoplastspannringes und außerdem an den Rändern Ringwulste (4) vorgesehen sind, in die die Versteifungsrippen (3) übergehen, daß an den Enden des Thermoplastspannrings (1) hakenförmige Gelenkaugen (10, 11) je einen Gelenkbolzen (20, 17) der Spannlasche (7) bzw. des Spannhebels (14) aufnehmen und daß die Spannlasche (7) sowie der Spannhebel (14) mit ihren Wangen (8 bzw. 15) die Gelenkaugen (10, 11) seitlich übergreifen.

2. Thermoplastspannring nach Anspruch 1, dadurch gekennzeichnet, daß die Versteifungsrippen (3) als flache Stege ausgebildet sind.

3. Thermoplastspannring nach Anspruch 1 oder 2, dadurch gekennzeichnet, daß die Spannlsche (7) mit ihren Wangen (8) den Spannhebel (14) und daß Thermoplastspannring (1) übergreift und mit ihrem endständigen Gelenkbolzen (21) in Lagerschlitze (18) der Wangen (15) des Spannhebel (14) eingreift.

## Claims

1. Thermoplastic tensioning ring intended for holding covers tensioned on barrels, having a U-shaped cross-section, having a tensioning lever (14) arranged pivotally at one end of the thermoplastic tensioning ring (1) and having a tensioning clip (7) which is held pivotally at the other end of the thermoplastic tensioning ring and is also held pivotally in the cheeks (15) of the tensioning lever, characterized in that numerous stiffening ribs (3) arranged parallel to the axis of the thermoplastic tensioning ring (1) are provided distributed over the periphery on the outside of the thermoplastic tensioning ring and, moreover, annular beads (4) are provided on the edges, with which annular beads (4) the stiffening ribs (3) merge, in that at the ends of the thermoplastic tensioning ring (1) hook-shaped joint eyes (10, 11) receive a respective hinge pin (20, 17) of the tensioning clip (7) and of the tensioning lever (14) respectively, and in that the tensioning clip (7) and the tensioning lever (14) laterally overlap the joint eyes (10, 11) by means of their cheeks (8 and 15 respectively).

2. Thermoplastic tensioning ring according to Claim 1, characterized in that the stiffening ribs (3) are constructed as flat webs.

3. Thermoplastic tensioning ring according to claim 1 or 2, characterized in that the tensioning clip (7) overlaps by means of its cheeks (8) the tensioning lever (14) and the thermoplastic tensioning ring (1) and engages by means of its end hinge pin (21) in mounting slits (18) in the cheeks (15) of the tensioning lever (14).

## Revendications

1. Anneau de serrage en matière thermoplastique qui est destiné au serrage de couvercles sur des fûts et présente une section transversale en forme de U, comprenant un levier de serrage (14), qui est agencé de manière à pouvoir pivoter à une extrémité de l'anneau de serrage en matière thermoplastique (1), et une attache de serrage (7), qui est maintenue de manière à pouvoir pivoter à l'autre extrémité de l'anneau de serrage en matière thermoplastique et également de manière à pouvoir pivoter dans les flasques (15) du lévier de serrage, caractérisé en ce qu'il est prévu plusieurs nervures de renforcement (3) sur le côté externe de l'anneau de serrage en matière thermoplastique, lesdites nervures étant réparties sur le pourtour et orientées parallèlement à l'axe de l'anneau de serrage en matière thermoplastique (1) et, en outre, sur les bords, des bourrelets annulaires (4) en lesquels les nervures de renforcement (3) se transforment, en ce que des œillets d'articulation en forme de crochet (10, 11) reçoivent chacun une goupille d'articulation (20, 17) de l'attache de serrage (7) ou respectivement du levier de serrage (14) aux extrémités de l'anneau de serrage en matière thermoplastique (1) et en ce que l'attache de serrage (7) ainsi que le levier de serrage (14) recouvrent latéralement les œillets d'articulation (10, 11) par leurs flasques (8 et respectivement 15).

2. Anneau de serrage en matière thermoplastique suivant la revendication 1, caractérisé en ce que les nervures de renforcement (3) sont réalisées sous la forme de nervures plates.

3. Anneau de serrage en matière thermoplastique suivant la revendication 1 ou 2, caractérisé en ce que l'attache de serrage (7) recouvre par ses flasques (8) le levier de serrage (14) et l'anneau de serrage en matière thermoplastique (1) et en ce qu'elle s'engage dans l'entaille de support (18) des flasques (15) du levier de serrage (14) par sa goupille d'articulation (21) en position d'extrémité.

Fig.1

Fig. 5

Fig.3

Fig. 4

Fig. 2